# FASCICULE DE BREVET EUROPEEN

(11) **EP 0 367 694 B1**
(45) Date de publication et mention de la délivrance du brevet: **07.04.1993**
(21) Numéro de dépôt: 89420421.3
(22) Date de dépôt: 27.10.1989
(51) Int. Cl.: G11B 23/023, B65D 75/22

(54) **Coffret d'emballage à coques emboitables**
Verpackungsschachtel mit ineinandergreifenden Schalen
Packaging box with interlocking trays

(30) Priorité: 28.10.1988 FR 8815371
(43) Date de publication de la demande: 09.05.1990
(73) Titulaire: VINCENT-JOURET SA Société Anonyme, F-07200 Aubenas (FR)
(72) Inventeur: Mirabel, Bruno, F-07203 Aubenas Cédex (FR); Mirabel, Jean-Marc, F-07203 Aubenas Cédex (FR)
(74) Mandataire: Monnier, Guy

(56) Documents cités:
- EP-A- 0 284 458
- US-A- 4 778 051

## Description

On sait que pour l'emballage de certains types d'articles, on a recours à des coffrets ou écrins dont l'aspect extérieur est similaire à celui d'un livre et qui comprennent, obtenues par thermoformage d'une même feuille de matière synthétique, deux coques en relief profilées et dimensionnées de manière à s'emboîter l'une dans l'autre moyennant repliage le long des bords longitudinaux de la partie centrale, laquelle forme alors le dos de l'ensemble.

En vue d'améliorer l'aspect esthétique de ce type de coffrets et de faciliter notamment sa décoration extérieure par impression, sérigraphie ou autre processus analogue, on a proposé de doubler en quelque sorte les coques emboîtables en assemblant par collage la feuille de matière synthétique thermoformée qui les comporte à une même feuille extérieure en carton semi-rigide. Il convient toutefois d'observer qu'on se heurte alors à un inconvénient tenant au fait que lors de la fermeture du coffret par repliage, la feuille extérieure en carton est soumise à un effort d'extension alors que la feuille intérieure en matière synthétique est soumise à un effort de contraction ; la combinaison de ces efforts opposés gêne évidemment le repliage et provoque des plissages disgracieux.

Le document EP-A-284 458 (ALLARDI) a pour objet un coffret d'emballage du type sus-mentionné et montre une solution ou problème du repliage disgracieux. Suivant ce document la feuille extérieure en carton, assemblée par collage à une feuille intérieure en matière plastique thermoformée pour définir deux coques prévues de part et d'autre d'une partie centrale ou dos afin de s'emboîter l'une dans l'autre moyennant repliage le long des bords longitudinaux de ce dos, comporte deux refoulages disposés sensiblement en regard de chacun des bords internes des deux coques, étant observé que chaque refoulage n'est pas collé à la feuille intérieure en matière plastique en vue de rester libre, à son niveau, par rapport à ladite feuille et de permettre ainsi le glissement relatif des deux feuilles lors de la fermeture du coffret.

Cette liberté des deux feuilles nécessite toutefois de prévoir une réserve d'encollage au droit des refoulages ou dans l'intervalle compris entre ces derniers.

C'est à cet inconvénient qu'entend principalement remédier la présente invention, laquelle a pour objet le coffret d'emballage qui est défini à la revendication 1.

En fait l'invention consiste à positionner les refoulages au niveau de la partie creuse de chacune des coques, ce qui élimine toute obligation de réserve d'encollage.

L'on conçoit en outre que par suite de leur emplacement, ces refoulages peuvent être prévus en un nombre quelconque, en fonction de l'épaisseur de la feuille extérieure en carton.

Le dessin annexé, donné à titre d'exemple, permettra de mieux comprendre l'invention, les caractéristiques qu'elle présente et les avantages qu'elle est susceptible de procurer :
Fig. 1 montre en perspective un coffret établi conformément à la présente invention.
Fig. 2 est une coupe transversale schématique représentant à une échelle très agrandie le coffret suivant fig. 1 à la position dépliée à plat.
Fig. 3 reproduit fig. 2 après repliage ou fermeture du coffret.
Fig. 4 est une vue en bout de l'une des extrémités du dos central à l'état déplié.
Fig. 5 est la vue en plan correspondant.
Fig. 6 montre trois coffrets disposés côte-à-côte.
Fig. 7 illustre ces trois mêmes coffrets dans le cas où leur dos ne serait pas muni des deux nervures représentées en fig. 4 et 5.

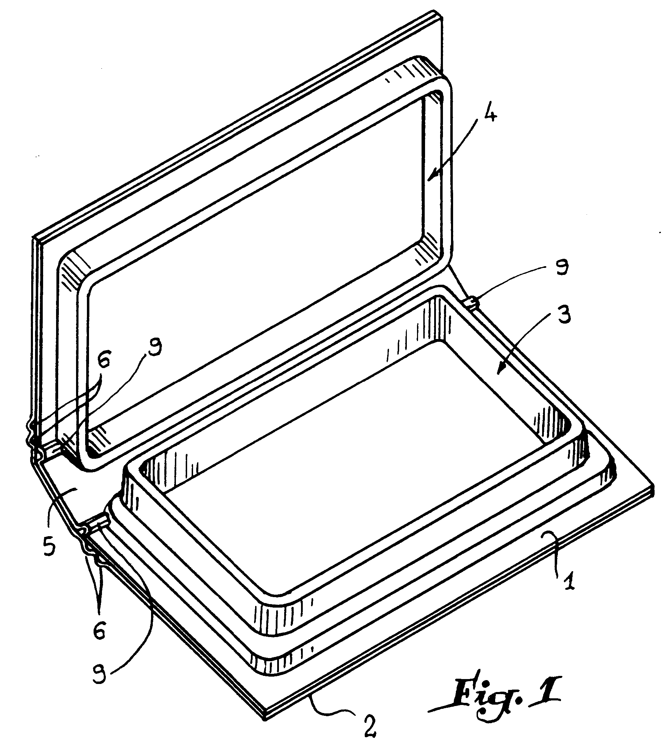

Le coffret représenté en fig. 1 à 3 comprend essentiellement, à la façon d'ailleurs connue en elle-même, une feuille de matière synthétique 1 qui est assemblée par collage à une feuille de carton 2 de nature semi-rigide. Préalablement à l'assemblage, la feuille 1 a été soumise à une opération de thermoformage propre à déterminer, sur sa face opposée à celle destinée à être rendue solidaire de la feuille 2, deux coques en relief 3 et 4, profilées et dimensionnées de façon à ce que la coque 3, destinée à former boîtier apte à renfermer l'article à emballer, soit susceptible de s'emboîter à l'intérieur de la coque 4 moyennant repliage de celle-ci à la manière d'un couvercle de fermeture, la partie centrale 5 des deux feuilles 1 et 2 faisant fonction de dos.

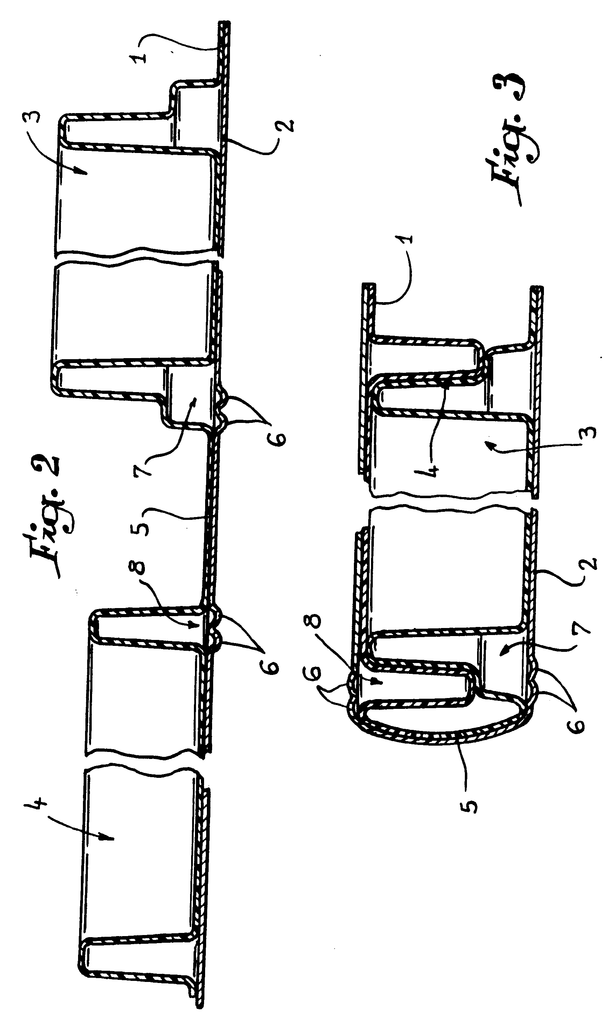

Conformément à la présente invention, en vue de faciliter le repliage au niveau des deux bords longitudinaux du dos central 5, on a fait comporter à la feuille de carton 2 des lignes parallèles de refoulage 6, au nombre de quatre dans l'exemple de réalisation considéré. Ces lignes 6 sont prévues deux par deux et elles sont positionnées sur la feuille de carton 2 de façon à ce qu'une fois cette dernière assemblée par collage à la feuille 1, lesdites lignes se trouvent disposées en vis-à-vis des parties creuses 7 et 8 des coques 3 et 4, comme clairement illustré en fig. 2.

On comprend sans peine que bien que les deux feuilles 1 et 2 soient entièrement enduites de colle, sans aucune réserve, en vue de leur assemblage, elles ne sont pas rendues solidaires l'une de l'autre au niveau des lignes de refoulage 6 par suite de l'existence des parties creuses 7 et 8. Dans ces conditions, ces lignes 6 permettent la déformation de la feuille de carton 2 par extension lors du repliage, à la manière illustrée en fig. 3. Cette faculté de déformation par extension évite toute formation de plissages disgracieux au niveau des bords longitudinaux de la partie centrale ou dos 5.

Il va de soi que le nombre des lignes de refoulage 6 peut varier dans une large mesure ; dans le cas d'une feuille de carton 2 d'épaisseur réduite, on peut se contenter d'une seule ligne 6 de part et d'autre du dos 5, tandis qu'un carton plus épais et plus raide nécessitera la présente de deux, trois ou même quatre lignes 6 le long de chacun des bords longitudinaux du dos 5, ces lignes étant susceptibles de venir aisément se loger au niveau des parties creuses 7 et 8;

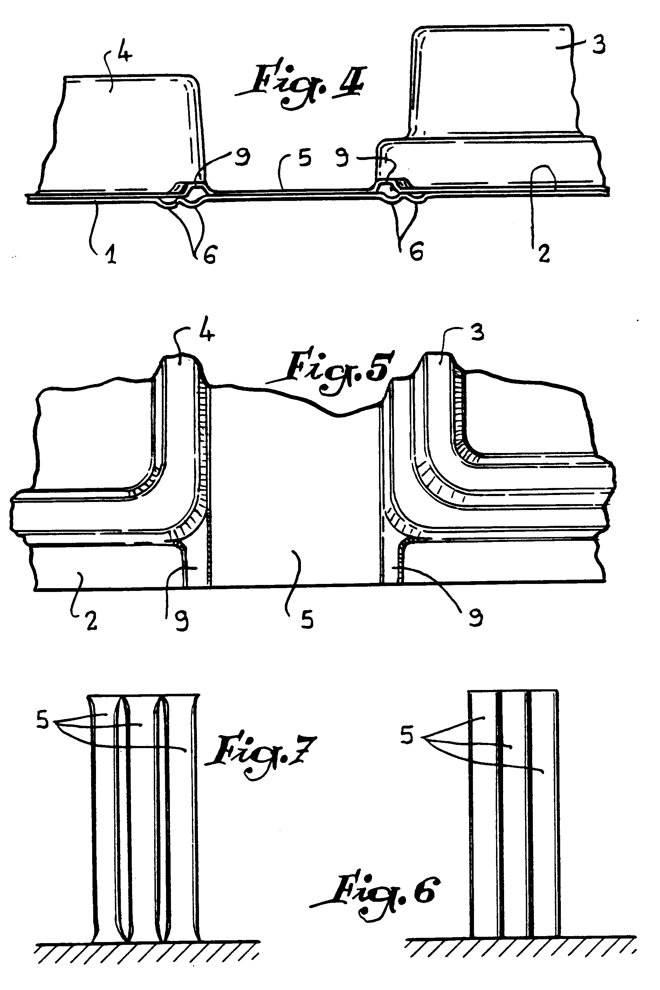

Suivant une autre disposition remarquable de l'invention, on fait comporter à la face interne de la feuille de matière synthétique 1 des lignes de refoulage 9 qui sont disposées au niveau des bords longitudinaux du dos central 5, dans le prolongement de la partie intérieure des coques 3 et 4, à la manière illustrée en fig. 4 et 5.

Les essais ont démontré que ces refoulages 9 opéraient le raidissement des extrémités du dos 5 dont les bords présentent de ce fait le profil parfaitement rectiligne montré en fig. 6, et non par le profil plus ou moins évasé visible en fig. 7 qui représente les mêmes coffrets supposés non équipés desdites nervures 9.

## Revendications

1. Coffret d'emballage, du genre comprenant d'une part une feuille intérieure en matière synthétique (1) conformée par thermoformage pour présenter deux coques en relief (3, 4) prévues de part et d'autre d'une partie centrale ou dos (5) de façon à s'emboîter l'une dans l'autre moyennant repliage le long des bords longitudinaux dudit dos, et d'autre part, assemblée à cette feuille intérieure (1), une feuille extérieure de carton (2) comportant au moins une ligne de refoulage (6) permettant l'extension de la feuille extérieure de carton (2) lors de la fermeture de l'ensemble, caractérisée en ce que la ligne de refoulage est disposée au niveau de la partie creuse (7, 8) de chacune des coques (3, 4) afin de rester libre en dépit de l'assemblage des deux feuilles.

2. Coffret suivant la revendication 1, caractérisé en ce que la feuille intérieure en matière synthétique (1) comporte elle-même, disposées contre les bords extérieurs des coques (3, 4), le long des bords longitudinaux du dos central (5), des lignes de refoulage (9) en vue de raidir les bords longitudinaux du dos central (5) évitant tout évasement disgracieux des extrémités de ce dos.

## Patentansprüche

1. Verpackungskasten bestehend einerseits aus einer inneren Folie aus synthetischem Material (1), die von einer Thermoform-Maschine derart gepreßt ist, daß sie zwei Reliefschalen bildet (3, 4), die beiderseits eines zentralen Teiles oder Rückens (5) vorgesehen sind, so daß sie ineinander passen, wenn man sie längs der Längsseiten des besagten Rückens zusammenklappt und andererseits, aus einer äußeren Folie aus Pappe (2), die mit dieser inneren Folie (1) verbunden und mit mindestens einer Stauchlinie (6) versehen ist, die die Dehnung der äußeren Pappfolie (2) beim Schließen des Ganzen ermöglicht, dadurch gekennzeichnet,
daß sich die Stauchlinie auf der Höhe des hohlen Teiles (7, 8) von jeder Schale (3, 4) befindet, so daß sie trotz Verbindung beider Folien frei bleibt.

2. Kasten nach Anspruch 1,
dadurch gekennzeichnet,
daß die innere Folie aus sythetischem Material (1) Stauchlinien (9) zur Versteifung der Längsseiten des zentralen Rückens (5) besitzt, die gegen die äußeren Längsseiten der Schalen (3, 4), längs der Längsseiten des zentralen Rückens (5) angeordnet sind, was jegliche unschöne Ausbauchung der Rückenenden vermeidet.

## Claims

1. Packaging box, of the type comprising, on the one hand, an inner plastics sheet (1) thermally formed to provide two relief shells (3,4) and a further central part or spine (5), so that one shell nests in the other by means of folding along the longitudinal edge of said spine, and, on the other hand, joined to this inner sheet (1), an outer sheet of card (2) comprising at least one press line (6) allowing the extension of outer sheet of card (2) during closing of the assembly, characterised in that the press line is arranged adjacent the hollow part (7,8) of each of shells (3,4) so as to remain free in spite of the connection between the two sheets.

2. Box according to claim 1, characterised in that the inner plastics sheet (1) abuts the outer edges of shells (3,4) and the longitudinal edge of spine (5); press lines (9), because of the stiffness of the longitudinal edges of spine (5), inhibiting substantial widening of the ends of that spine.
